# EUROPEAN PATENT APPLICATION

(11) **EP 1 852 698 A1**
(43) Date of publication of application: **07.11.2007**
(21) Application number: 06712157.4
(22) Date of filing: 23.01.2006
(51) Int. Cl.: G01N 27/327

(54) **SENSOR CHIP**

(30) Priority: 24.01.2005 JP 2005015310; 24.01.2005 JP 2005016168
(71) Applicant: Sumitomo Electric Industries, Ltd., Osaka-shi, Osaka 541-0041 (JP); National Institute of Advanced Industrial Science and Technology, Tokyo 100-8921 (JP)
(72) Inventor: HOSOYA, T., c/o Sumitomo Elec. Ind., Ltd., Osaka-shi, Osaka 554-0024 (JP); KAIMORI, S., Sumitomo Elec. Ind., Ltd., Osaka-shi, Osaka 554-0024 (JP); ICHINO, M., c/o Sumitomo Elec. Ind. Ltd,., Osaka-shi, Osaka 554-0024 (JP); NAKAMURA, H., c/o National Institute, Tsukuba-shi, Ibaraki 305-8562 (JP); GOTOH, M., c/o National Institute, Tsukuba-shi, Ibaraki 305-8562 (JP); KURUSU, F., c/o National Institute, Tsukuba-shi, Ibaraki 305-8562 (JP); ISHIKAWA, T., c/o National Institute, Tsukuba-shi, Ibaraki 305-8562 (JP); KARUBE, I., c/o National Institute, Tsukuba-shi, Iaraki 305-8562 (JP)
(74) Representative: Cross, Rupert Edward Blount
(86) International application number: PCT/JP2006/300941
(87) International publication number: WO 2006/078010

(57) **Abstract**

There is provided a sensor chip including: a base plate; a cover layer; a hollow reaction portion provided between the base plate and the cover layer, in which a reaction is performed between a sample and a reagent applied thereinto; a sensing member constructed of an electrode which is exposed to the hollow reaction portion; and a sample inlet for conducting the sample to the hollow reaction portion, wherein
entire portions of the base plate and the cover layer, which are located opposite to the sensing member provided with the hollow reaction portion, are made transparent.
Otherwise, in the above-described sensor chip, a plate A having a groove A to which a reagent has been applied and a plate B having a groove B are stacked on each other in such a manner that the groove A is coupled with the groove B, so that the hollow reaction portion is formed; and an opening width of the groove B is larger than an opening width of the groove A at a portion of the groove B which is located opposite to a portion with the groove A, to which the reagent has been applied.

## Description

### Technical Field

The present invention is related to a sensor chip capable of simply detecting and of quantitative-analyzing a chemical substance contained in a sample.

### Background Art

Biosensor chips correspond to such sensor chips that samples are conducted to hollow reaction portions formed in these sensor chips; biochemical reactions such as enzyme reactions, antigen-antibody reactions, and the like may occur with respect to the conducted samples within the hollow reaction portions; and then, information acquired from the biochemical reactions is outputted from the sensor chips. These biosensor chips are utilized as, for example, blood sugar level sensors and urinary sugar level sensors in order to perform home health diagnoses (self-medical cares) capable of self-managing and preventing diabetes. The blood sugar level sensors measure glucose amounts (blood sugar levels) contained in blood.

For instance, JP-A-2001-159618 (patentpublication 1) discloses such a biosensor chip (claim 1) equipped with a cavity (hollow reaction portion) between two sheets of base plates, into which a fluid sample such as blood is conducted. In this biosensor, the fluid sample is reacted with a reagent in this hollow reaction portion, and then, components contained in the fluid sample are analyzed based upon this reaction. The sensor chip such as the above-described biosensor chip is equipped with a sensing member constructed of an electrode system (operation electrode and counter electrode), a lead (output terminals) for outputting a sensed signal to an external unit, and a sample inlet in addition to the hollow reaction portion in which the sample is reacted with the reagent.

In this case, as the electrode system, such electrodes manufactured by screen printing methods and the like have been widely employed, and are disclosed in, for example, JP-A-9-5288 (patent publication 2). However, there are some possibilities that pin holes caused by uneven printing operations may be produced in electrodes manufactured by the screen printing methods. Since areas of electrodes are varied due to these pin holes, measured data may be fluctuated. Also, in such a case where electrodes are made of carbon electrodes and silver leads are present on lower layer portions, such an influence may occur by which enzyme reactions are impeded. More specifically, in sensor chips for measuring data by employing very small amounts of samples, since absolute areas of electrodes are small, fluctuations caused by pin holds may readily cause very important problems. Furthermore, even when such a pin hole is not present, if an extremely thin portion of an electrode is present due to uneven printing operation, then a resistance value is varied, so that data may be similarly fluctuated.

Under such a circumstance, examinations for examining pin holes of electrodes are required. In general, as examination methods, such a method has been employed. That is, examination light is vertically irradiated onto an electrode plane, and then, transmitted light is measured. If such an examination can be carried out even in completed sensor chips, then the examinations can be collected in a final stage. As a result, not only productivity may be improved, but also, even when failure products are derived, since electrodes can be easily checked, the causes of failure products can be quickly searched.

Also, such a sensor chip may be manufactured by performing the below-mentioned method. That is, in this method, a sensing member and an output terminal are formed on a base plate seat which forms a base plate; and furthermore, a seat layer (spacer) having a groove for forming a hollow reaction portion is formed so as to form a stacked layer member; another seat layer having a groove for forming the hollow reaction portion, and a base plate seat for forming a cover layer are adhered to a stacked layer member in such a manner that corresponding grooves are overlapped with each other. Normally, a reagent (enzyme, mediator etc.) is applied to one groove, and then, the hollow reaction portion is formed by overlapping these two grooves with each other.

In particular, the below-mentioned hollow reaction portion forming method can manufacture seat layers in a batch manner, so that productivity may become high and positioning precision of adhesions may be improved. In this method, seat layers (spacers) having one pair of grooves are stacked on one sheet of base plate seat, and one pair of grooves are positioned in a symmetrical relationship, while a folding line for dividing this base plate seat by approximately two equal parts is employed as an axis; after a reagent has been applied to at least one of the paired grooves, the stacked layer member is folded in two in such a manner that these seat layers are located opposite to each other while the folding line is set to a center; and then, the grooves are overlapped with each other so as to form the hollow reaction portion.

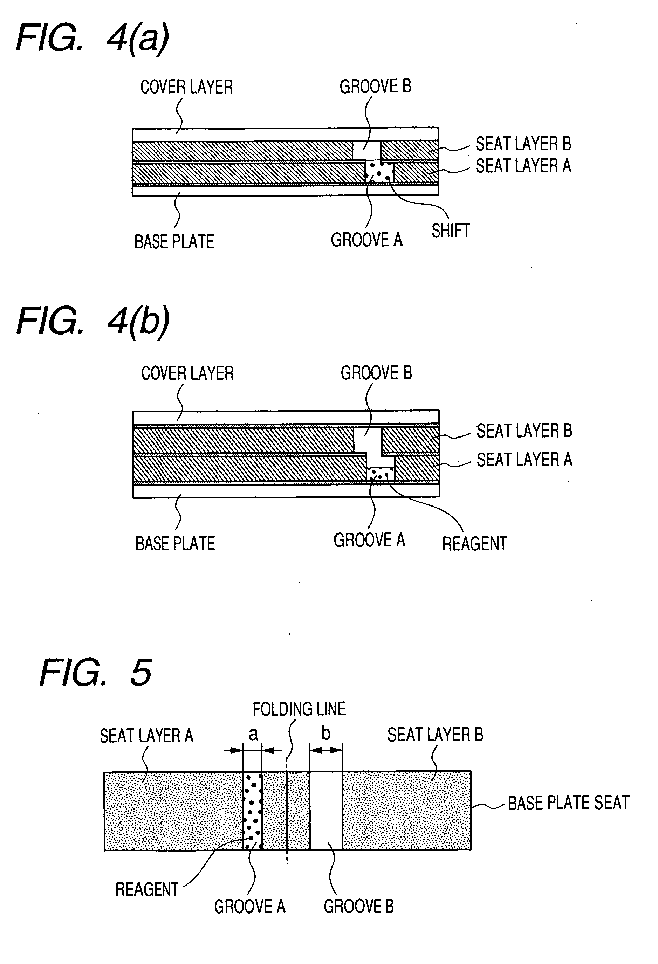

However, even in this two holding method, due to fluctuations of the actual manufacturing operation, there are some possibilities that both the paired grooves are formed at positions shifted from the symmetrical relationship, or both the paired grooves are shifted from the symmetrical relationship when the base plate is folded. Also, shift degrees are fluctuated every sensor chip. If both the paired grooves are shi fted from the symmetrical relationship, when the base plate is folded in two, overlapping of the grooves may be shifted. Thus, as indicated in Fig. 4(a), the reagent applied portion of one groove is covered by the surface of the seat layer which forms another groove, and the reaction area with the sample when the sample is conducted is reduced, namely, fluctuations in signal strengths for each of the sensor chips may occur.

This problem may be prevented to some extent. That is, as indicated in Fig. 4 (b), if the height of the groove on the side of the reagent applied portion is set to be higher than the applied reagent, then the reagent applied portion is not covered. Even so, in such a case where the surface of the seat layer which forms the other groove is located close to the reagent surface, since the injection flow status of the sample is changed, there are some possibilities that the chip characteristic is changed. If the height of this groove is made higher, then this fluctuationmaybe reduced. However, the amount of the sample required for the measurement is increased, so that this solution is not proper for such biosensors which have a purpose capable of measuring a very small amount.
Patent Publication 1: JP-A-2001-159618 (claim 1)
Patent Publication 2: JP-A-9-5288

### Disclosure of the Invention

### Problems to be solved by the Invention

The objects of the present invention are to solve the above-described problems contained by the conventional sensor chips. That is to say, a first object of the present invention is to provide a sensor chip including: a hollow reaction portion in which a reagent has been applied to at least one wall plane thereof; a sensing member constructed of an electrode exposed to the hollow reaction portion; and a sample inlet, by which an examination as to a pin hole of the electrode and the like can be carried out after the sensor chip has been accomplished.

Also, a second object of the present invention is to provide a sensor chip including: a hollow reaction portion in which a reagent has been applied to at least one wall plane thereof; a sensing member constructed of an electrode exposed to the hollow reaction portion; and a sample inlet, by which the hollow reaction portion is formed in such a manner that a plate having a groove to which a reagent has been applied is stacked on another plate having another groove corresponding to the mentioned groove so as to overlap these grooves to each other. The present invention is to provide such sensor chips that even when shifts of overlapped grooves are fluctuated among these sensor chips, characteristics of the sensor chips are not fluctuated, and furthermore, even when a small amount of a sample is conducted, this sample can be measured by these sensor chips.

### Means for solving the Problems

The above-described first object is achieved by a sensor chip including: a base plate; a cover layer; a hollow reaction portion provided between the base plate and the cover layer, in which a reaction is performed between a sample and a reagent applied thereinto; a sensing member constructed of an electrode which is exposed to the hollow reaction portion; and a sample inlet for conducting the sample to the hollow reaction portion; wherein entire portions of the base plate and the cover layer, which are located opposite to the sensing member provided with the hollow reaction portion, are made transparent (claim 1, will be referred to as "first embodiment" hereinafter).

The electrode which constitutes the sensing member of the sensor chip and is exposed to the hollow reaction portion is provided on at least one of the base plate and the cover layer. In the first embodiment of the present invention, the entire portions of the base plate and the cover layer, which are located opposite to the sensing member provided with the hollow reaction portion, are featured to be made transparent. The portion which is located opposite to the sensing portion within the hollow reaction portion is a portion which is located opposite to a portion of the electrode exposed to the hollow reaction portion, or another portion where the electrode exposed to the hollow reaction portion is provided.

In other words, the entire portion of at least such portions of the base plate and the cover layer, which are located opposite to each other is made transparent, or the entire portion where the electrode is formed which is exposed to the hollow reaction portion is made transparent. As a result, the entire portion of the sensing member which is exposed to the hollow reaction portion is irradiated by the examination light which is entered from at least one side of the base plate and the cover layer. In accordance with this feature, with respect to the entire electrode which is exposed to the hollow reaction portion, a pin hole and a thinner portion can be checked by that the examination light is irradiated onto the electrode plane from at least one side of the base plate and the cover layer, and then, an intensity distribution of the transmitted light is measured.

The present invention provides the below-mentioned structures as further preferable embodiments.

In the sensor chip of the first embodiment, transparent portions of the base plate and the cover layer have optical transmittance identical to each other (claim 2).

As explained above, the detecting operation can be performed by checking the intensity distribution and the contrast of the transmitted light. This intensity distribution may be influenced by the optical transmittance as to the transparent portions of the base plate and the cover layer. As a consequence, if the optical transmittance as to the transparent portion of the base plate is different from the optical transmittance as to the transparent portion of the cover layer, then there are some possibilities that measurement results are different from each other in such two cases that the examination light is irradiated from the base plate side, and also the examination light is irradiated from the cover layer side. In particular, when a precise examination is carried out by employing an image processing operation, and the like, this problem may become serious.

Under such a circumstance, since the optical transmittance as to the transparent portions of the base plate and the cover layer are made equal to each other, even if the examination light is irradiated from any side of the base plate and the cover layer, such data having the substantially same intensity distributions can be acquired. As a result, front surfaces and rear surfaces of chips are no longer matched with each other during examinations, so that there is such an effect that the examination procedure can be simplified.

In the sensor chip of the first embodiment, the entire portions of the base plate and the cover layer, which are located opposite to the sensing member provided in the hollow reaction portion, are formed by materials having the same thicknesses and the same qualities (claim 3).

Since the entire portions of the base plate and the cover layer, which are located opposite to the sensing member provided in the hollow reaction portion, are formed by materials having the same thicknesses and the same qualities, the optical transmittance of the transparent portions can be easily made equal to each other. Claim 3 corresponds to this embodiment.

In the sensor chip of the first embodiment, the sample inlet and another port to be provided, if necessary, are provided in a side plane portion of the sensor chip (claim 4).

The sensor chip of the present invention has the sample inlet which is used to conduct the simple to the hollow reaction portion. Furthermore, another port such as an air port may be provided in the sensor chip, if necessary. However, if these ports are located at the upper surface of the chip, namely, the plane into which the examination light is entered, or at the lower plane thereof, namely, the plane from which the transmitted light is projected, then irregular reflections of light caused by concaves/convexes of the port portions may become noise in the sensor chip of the first embodiment, resulting in errors when the examination is carried out. As a consequence, while the sample inlet and another port to be provided if necessary are positioned on the side surface of the sensor chip, it is preferable that the upper surface or the lower surface of the sensor chip is smoothed in order to reduce the noise which is caused by the irregular reflections of the light.

In the sensor chip of the first embodiment, an entire portion of the cover layer, which sandwiches the hollow reaction portion, is transparent (claim 5).

The portion which sandwiches the hollow reaction portion is such a portion which is faced to the hollow reaction portion. In the conventional sensor chip in which the cover layer is opaque, it can be hardly recognized with precision by checking whether or not a sufficient amount of sample such as blood has been filled into the hollow reaction portion when the sensor chip is used. Under such a circumstance, since all of the portions of the cover layer, which sandwich the hollow reaction portion, are made transparent, there is such a merit that the sample inletting statuses can be visually recognized when the sensor chip is used.

In this case, in order to improve the visually recognizing characteristic, an opaque material or a semi-transparent material may be alternatively adhered, or coated on the outer side of such a portion of the cover layer, which is not located opposite to the hollow reaction portion. When all of the portions of the cover layer are transparent which are located opposite to the hollow reaction portion, and also, other portions thereof are covered by the opaque material or the semi-transparent material, the position of the hollow reaction portion can be easily discriminated.

In the sensor chip featured by that the portion of the cover layer which sandwiches the hollow reaction portion is made transparent, an entire portion of the base plate, which sandwiches the hollow reaction portion, is transparent; and an opaque or semitransparent material layer is provided on the outer side of the base plate (claim 6).

1 When the portions of the cover layer and the base plate are made transparent which sandwich the hollow reaction portion, and furthermore, the opaque material layer or the semi-transparent material layer is provided on the outer side of the base plate, more specifically, on the outer side of the portions which sandwich the hollow reaction portion, visual recognition of conductions of the sample such as blood can be further easily realized when the sensor chip is used. There is another merit that the front and rear planes of the sensor chip may be readily discriminated. As methods for providing the opaque material layer or the semi-transparent material layer on the outer side of the base plate, a method for adhering, or coating the opaque material or the semi-transparent material may be conceived.

As previously explained, in such a case where both the portions of the base plate and the cover layer are made transparent which are located opposite to the electrode, it is preferable that a pin hole and/or a thinner portion can be more easily detected. Accordingly, it is preferable that the opaque material or the semi-transparent material is adhered, or coated after the examination is carried out.

The above-described second object of the present invention may be achieved by a sensor chip including: a base plate; a cover layer; a hollow reaction portion provided between the base plate and the cover layer, in which a reaction is performed between a sample and a reagent applied thereinto; a sensing member constructed of an electrode which is exposed to the hollow reaction portion; and a sample inlet for conducting the sample to the hollow reaction portion, wherein a plate A having a groove A to which a reagent has been applied and a plate B having a groove B are stacked on each other in such a manner that the groove A is coupled with the groove B, so that the hollow reaction portion is formed, and an opening width of the groove B is larger than an opening width of the groove A at a portion of the groove B which is located opposite to a portion with the groove A, to which the reagent has been applied (claim 7, will be referred to as "second embodiment" hereinafter).

The sensor chip of the second embodiment of the present invention is featured by that the plate A having the groove A and the plate B having the groove B are stacked on each other in such a manner that the groove A is coupled with the groove B, so that the hollow reaction portion is formed. Furthermore, the opening width of the groove B is made wider than the opening width of the groove A at the portion of the groove B, which is located opposite to the portion within the groove A, to which the reagent has been applied. In this case, an opening width implies a width of a groove in a surface of a seat layer.

Because of a feature that the opening width of the groove B is wider than the opening width of the groove A, even if the overlapping position between the groove A and the groove B is slightly shifted, the reagent applied portion of the hollow reaction portion is not covered by the surface of the plate B. As a result, while the chip characteristic is not changed, such sensor chips having the same characteristics can be manufactured under stable conditions. As a consequence, the sensor chips manufactured in this method can have the stable chip characteristics. Also, even when the overlapping position is slightly shifted, the reagent appliedportion is not covered by the surface of the plate B. As a result, event if the height of the groove A is not made considerably higher than the height of the reagent applied portion, the stable chip characteristic can be obtained. As a consequence, since the volume of the hollow reaction portion is not required to become considerably large, the sensor chip can be sufficiently adapted to such a measuring operation by employing a small amount of a sample.

It should also be understood that when the reagent applied portion has been formed on a portion of the groove A along the length direction thereof, even if only such a width of the portion in the groove B is wide which corresponds to the portion where this reagent applied portion has been formed, the stable chip characteristic may be achieved.

As the plate A and the plate B, the below-mentioned members may be exemplified:
1) A plate is made of only a resin plate containing a groove having a bottom (namely, groove in which opening portion is formed in only one of front surface and rear surface), which i formed by an etching method;
2) A stacked layer member in which a seat layer having a groove (through-hole groove having opening portions in both front surface and rear surface) is formed on a resin plate; and
3) A plate is made by combining the members 1) and 2) with each other, namely, such a stacked layer member that a seat layer is formed on a resin plate containing a groove having a button, the seat layer has a through-hole groove at a position corresponding to the above-described groove, and another groove is formed by coupling both the grooves with each other. In view of productivity, the member 2) is preferable.

Claims 8 and 9 correspond to such sensor chips which are manufactured by employing this preferable method. In other words, according to claim 8, in the above-described sensor chip, the plate A having the groove A to which the reagent is applied is a stacked layer member which is formed by the base plate and a seat layer A stacked on the base plate and having the groove A. Also, according to claim 9, in the above-described sensor chip, the plate B having the groove B which forms the hollow reaction portion coupled to the above-described groove to which the reagent is applied is a stacked layer member which is formed by the cover layer and a seat layer B formed on the cover layer and having the groove B. It should also be understood that the base plate and the cover layer are similar to each other with respect to structures, materials, and functions thereof. Accordingly, although any member may be arbitrarily determined as the base plate or the cover layer under normal condition, in the case, such a member which is stacked with the seat layer A having the groove A is defined as the base plate, whereas such a member which is stacked with the seat layer B having the groove B is defined as the cover layer.

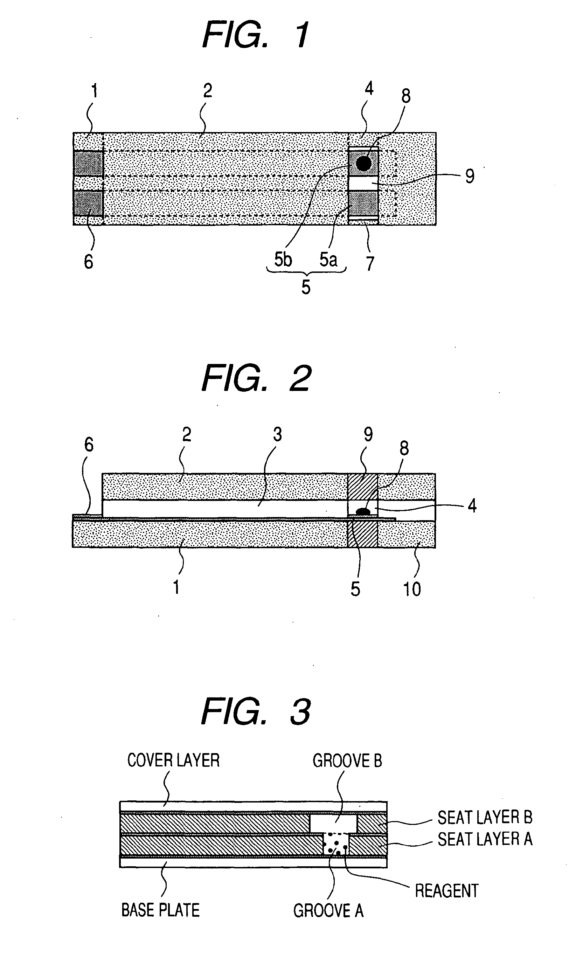

More specifically, it is preferable to construct that both the plate A and the plate B correspond to such a stacked layer member made by stacking a base plate or a cover layer, and a seat layer having a groove and formed on the base plate or the cover layer. Fig. 3 is a conceptional sectional view for indicating a feature of a sensor chip in this specificallypreferable case. Also, the sensor chip shown in this drawing has such a feature of the present invention that the opening width of the groove B within the seat layer B is made wider than the opening width of the groove A to which the reagent is applied.

Each of the base plate, the cover layer, the seat layer A, and the seat layer B may be made of a seat of a single layer, or may be alternatively made of a stacked layer formed by stacking multiple layers of seats. For example, both the seat layer A and the seat layer B may be formed in such a manner that two or more sheets of seats having through-hole grooves at corresponding positions are stacked on each other.

The stacking process for stacking the plate A on the plate B may be carried out at the same time when the seats are stacked on each other in order to form the base plate, the cover layer, the seat layer A, and the seat layer B respectively. In other words, the respective seats for forming the substrate, the cover layer, the seat layer A, and the seat layer B respectively may be overlapped with each other in such a manner that the sensor chip of the present invention is formed and then may be stacked on each other within 1 time. However, in view of productivity, after the base plate, the cover layer, the seat layer A, and/or the seat layer B are formed, it is preferable to stack the plate A on the plate B.

Furthermore, in the case where the plate A and the plate B are constituted by a base plate and a seat layer, the stacking process between the plate A and the plate B, and also the staking process for stacking the seat layer on the base plate or the cover layer may be carried out at the same time. However, in view of productivity, the below-mentioned adhering method is preferably employed. That is, the seat layer is stacked on the base plate or the cover layer and then the plate A and the plate B are formed thereon. Thereafter, the plate A and the plate B are adhered to each other in such a manner that the groove A is coupled to the groove B, so that the hollow reaction portion is formed. Claim 10 provides a sensor chip which is manufactured by this preferable method. According to claim 10, in the above-described sensor chip, the plate A is adhered to the plate B, after the plate A and the plate B have been formed.

The above-described sensor chip of the present invention is manufactured by the following method. That is, the sensor chip is manufactured in such a manner that while a single seat for forming the plate A and the plate B is more preferably provided, the single seat having both the groove A and the groove B at positions which are substantially equal distances from a folding line for dividing the seat by approximately two equal parts is folded in two while the folding line is set to a center; and then, both sides of the folding line are adhered to each other. In this case, one-sided portion of the single seat corresponds to the plate A and the other-sided portion corresponds to the plate B while the folding line of the single seat is sandwiched. According to claim 11, the above-described sensor chip is manufactured by performing the more preferable manufacturing method.

Fig. 5 is a conceptional plan view for indicating one step of an example as to the above-described preferable manufacturing method, namely, represents such a condition that both a seat layer A and a seat layer B are formed on one sheet of a base plate seat. A groove "A" and another groove "B" are provided at positions which are separated from a folding line by substantially equal distances, while an opening width (symbol "b" in this drawing) of the groove B is wider than an opening width (symbol "a" in this drawing) of the groove A. It should be noted that in this example, although a reagent has been applied to the entire surface of the groove A, there are some possibilities that the reagent may be applied only to a portion of the groove A along the length direction thereof. In this case, such an opening width of the groove B which is wider than the opening width of the groove A may be only a portion corresponding to the reagent applied portion.

It should also be understood that the above-explained sensor chip of the present invention may be manufactured not by such a two-folding method, but by other methods, for example, two sheets of plates where grooves have been formed are stacked on each other by being located opposite to each other. Besides, since the plates can be overlapped with each other by this two-folding method in higher positional precision than that of other method, this two-folding method may be preferably employed.

The sensor chip of the present invention may be suitably employed as, especially, a biosensor chip with respect to any of the first embodiment and the second embodiment. Claim 12 is to provide the above-described sensor chip which is a biosensor chip. The biosensor chip of the present invention may be utilized as, for instance, blood sugar level sensors and urinary sugar level sensors in order to perform home health diagnoses (self-medical cares) capable of self-managing and preventing diabetes. The blood sugar level sensors measure glucose amounts (blood sugar levels) contained in blood.

While the sensor chip of the present invention has at least one sample inlet, when a hollow reaction portion has a sample inlet at both edges thereof, this hollow reaction portion is made in a straw shape, so that a sample can be easily conducted due to a capillary phenomenon. In the second embodiment, such a portion that the groove A or the groove B is intersected with a side plane of the plate A or the plate B constitutes the opening portion which will become the sample inlet after the sensor chip is manufactured, while this side plane of the plate A, or the plate B corresponds to the long edge of the base plate sheet in the example of Fig. 5. As a result, in such a case where both the groove A and the groove B are reached to the side planes of both sides of the plate A or the plate B, the sample inlet is formed in both the side planes of the sensor chip, so that the hollow reaction portion becomes a straw shape.

### Advantages of the Invention

The sensor chip of the present invention corresponds to such a sensor chip including: the hollow reaction portion in which the reagent has been applied to at least one wall plane thereof; the sensing member constructed of the electrode exposed to the hollow reaction portion; and the sample inlet. Since the examination light is irradiated on to the electrode plane, the pin hole of the electrode and the thinner portion thereof can be examined in the accomplished sensor chip. As a consequence, the examinations may be concentrated to a final stage so that not only the sensor chip may be manufactured in high productivity, but also, even when failure products are derived, since electrodes can be easily checked, the causes of failure products can be quickly searched.

The sensor chip of the second embodiment of the present invention corresponds to the sensor chip including: the hollow reaction portion in which the reagent has been applied to at least one wall plane thereof; the sensing member constructed of the electrode exposed to the hollow reaction portion; and the sample inlet, by which the hollow reaction portion is formed in such a manner that the plate having the groove to which the reagent has been applied is stacked on another plate having another groove corresponding to the first-mentioned groove so as to overlap these grooves to each other. In this sensor chip, even when shifts of the overlapped grooves are fluctuated among these sensor chips, characteristics of the sensor chips are not fluctuated. As a consequence, the resulting sensor chip may have a stable characteristic. Also, since the volume of the hollow reaction portion need node increased, the sensor chip can be sufficiently applied even in such a measuring operation by employing a small amount of a sample.

### Brief Description of the Drawings

[Fig. 1]
   Fig. 1 is a plan view for indicating an example of a sensor chip according to a first embodiment of the present invention.
[Fig. 2]
   Fig. 2 is an edge view for indicating an example of the sensor chip of the first embodiment of the present invention.
[Fig. 3]
   Fig. 3 is a conceptional sectional view for showing an example of a sensor chip according to a second embodiment of the present invention.
[Fig. 4]
   Fig. 4 is the conceptional sectional view for representing the example of the conventional sensor chip.
[Fig. 5]
   Fig. 5 is a conceptional plan view for representing an example of a manufacturing member for the sensor chip of the second embodiment of the present invention.
[Fig. 6]

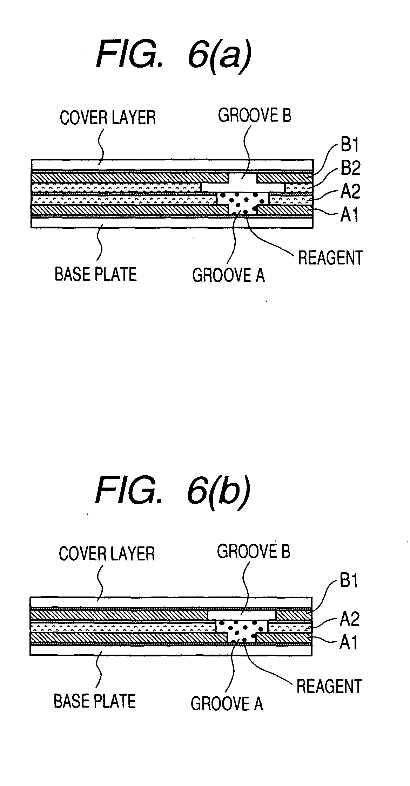

   Fig. 6 is a conceptional sectional view for indicating another example of the sensor chip according to the second embodiment of the present invention. Description of Reference Numerals and Signs

- 1: base plate
- 2: cover layer
- 4: hollow reaction portion
- 5: sensing member
- 7: sample inlet
- 9, 10: transparent portion

### Best Mode for Carry Out the Invention

Next, a description is made of best modes for carrying out the present invention. The present invention is not limited only to the present embodiment, but may be changed to another embodiment unless a gist of the present invention is changed.

As a material of both a base plate and a cover layer, which form a sensor chip of the present invention, a film made of an insulating material is selected. As the insulating material, the below-mentioned insulating materials may be exemplified: ceramics; glass; paper; biodegradation characteristic materials (for example, poly-lactic acid microbial product polyester etc.); thermoplastic resins such as polyvinyl chloride, polypropropylene, polystyrene, polycarbonate, acrylic resins, polybutylene terephtalate and polyethylene terephtalate (PET); thermosetting resins such as epoxy resins; and plastic materials such as UV hardened materials. In view of mechanical strengths, flexibility, easy processing for manufacturing chips, in particular, easy processing for two folded materials, plastic materials such as polyethylene terephtalate may be preferably employed.

A preferable range as to thicknesses of the base plate and the cover layer is varied in response to usage of sensor chips, and is not especially limited. In case of biosensor chips such as blood sugar level sensors, such a thickness range approximately between 100 and 300 µm is preferable.

In a first embodiment, as a material as to transparent portions of the base plate and the cover layer, transparent materials made of the above-exemplified materials are used. As the transparent portions, predetermined portions of the base plate and the cover layer may be replaced by the transparent materials. However, if the entire portion of the base plate and the cover layer are made of such transparent materials, then sensor chips may be manufactured in a high yield.

A hollow reaction portion of the sensor chip according to the present invention is a portion that when the sensor chip is used, a sample is conducted, and the conducted sample is chemically reacted. When the sensor chip is a biosensor chip, or the like, a reagent for causing a biochemical reaction of a catalyst, an enzyme, or the like to occur has been fixed in this biosensor chip, so that the chemical reaction of a sample is progressed by these members.

For example, in the case where the sensor chip corresponds to a glucose biosensor chip which measures a glucose amount within blood, the below-mentioned layer is formed in this portion: a glucose oxidase layer, a glucose oxidase-electron acceptor (mediator) mixture layer, a glucose oxidase-ablumin mixture layer, a glucose oxidase-electron acceptor-albumin mixture layer, or the like.

A sample which should be measured, for instance, blood, urine, an aqueous solution sample extracted on a production line, is conducted from a sample inlet to the above-described hollow reaction portion. Although the sample inlet may be provided on the base plate, as previously described, in the first embodiment, it is preferable to form that the sample inlet is opened on the side of a long edge of the sensor chip. Further, for example, in the case where the sample inlets are formed in both side surfaces of the sensor chip and the hollow reaction portion has a straw-shaped structure which are coupled between the sample inlet and the hollow reaction portion, a sample may be easily acquired, resulting in a preferable sensor structure.

A sensing member is constituted by at least two or more pieces of electrodes, and is exposed inside the hollow reaction portion. Normally, these electrodes are called as an operation electrode and a counter electrode. Further, the sensing member may employ another electrode such as a reference electrode, and other means. The electrodes may achieve such operations that a predetermined voltage is applied to the hollow reaction portion, current values produced by reactions are measured, and the like, while chemical substances contained in samples are detected and quantitative-analyzed based upon signals derived from these electrodes. As the electrodes, carbon electrodes and the like may be employed, and these electrodes may be manufactured by executing such a printing method that paste materials having an electric conductivity are printed on the base plate in a screen printing method. Although carbon is widely employed as this electric conductive material, metal particles such as silver, platinum, palladium, and copper may also be employed. Alternatively, mixtures of these metal particles may be employed.

The above-described electrodes are exposed within the hollow reaction portion. Furthermore, output terminal (lead terminal) portions of these electrodes are formed on the base plate, a spacer layer (this spacer layer is formed by adhering seat layers A and B to each other in second embodiment), or inside the cover layer, otherwise, are formed between these layers. The electrodes are electrically connectable to an external unit of the sensor chip. Thus, a predetermined voltage may be applied and a current value may be measured via the output terminal portions.

A reagent is applied inside the hollow reaction portion. Alternatively, two or more sorts of reagents may be applied. In the second embodiment, when two or more sorts of reagents are applied, such a reagent which gives an influence to a chip characteristics such as a signal strength due to a variation of a contact area between the own reagent and a sample must be applied to a groove "A", namely, this reagent must be applied to such a groove whose opening width is narrow. However, such a reagent which does not give a large influence to the chip characteristic even when the contact area between the sample and the own reagent is varied may be applied to a groove "B."

An application of a reagent may be carried out before the hollow reaction portion is formed, or after the hollow reaction portion is formed. Normally, it is preferable to apply a reagent before the hollow reaction portion is formed, because the reagent applying work may be easily carried out, and also, positioning of the reagent application may be readily performed.

Referring now to drawings, an example as to embodiments of the present invention will be described.

Fig. 1 is a plan view where a sensor chip of a first embodiment is viewed from the side of a cover layer. Fig. 2 is an edge view where this sensor chip is viewed from the side plane thereof. The sensor chip of this example contains a base plate 1, a cover layer 2, a hollow reaction portion 4, a sensing member 5, an output terminal 6 and a sample inlet 7. The hollow reaction portion 4 is provided within a spacer 3 present between the base plate 1 and the cover layer 2. The sensing member 5 is made of a carbon electrode provided in the hollow reaction portion 4. The sample inlet 7 conducts a sample to the hollow reaction portion 4. In this example, the sensing member 5 is constituted by a counter electrode 5a and an operation electrode 5b, while a reagent 8 has been applied onto the operation electrode 5b.

As shown in Figs. 1 and 2, a transparent portion 9 has been provided in the cover layer 2, and the transparent portion 9 contains an entire portion located opposite to the sensing member 5 within the hollow reaction portion 4. Another transparent portion 10 is provided also in the base plate 1 at a position opposite to the transparent portion 9, namely, at such a position which is faced to the sensing member 5 exposed inside the hollow reaction portion 4. Since examination light is entered from the side of the transparent portion 9 so as to irradiate the sensing member 5 and then is projected from the side of the transparent portion 10 so as to measure an intensity distribution of transmitted light, such a failure portion of the electrodes of the sensing member 5, for example, a pin hole, an extremely thin portion, and the like can be examined.

It should be understood that the base plate 1 and the cover layer 2 are manufactured by materials having the same thicknesses and the same qualities. As a consequence, even when examination light is entered from the side of the transparent portion 10 so as to irradiate the sensing member 5 and then is projected from the side of the transmitted portion 9 so as to measure an intensity distribution of transparent light, a failure portion may be similarly examined and thus a similar effect may be obtained.

Further, the sample inlet 7 is provided in the side plane portion of the sensor chip. As a result, entering of the examination light is not adversely influenced by concaves and convexes of the sample inlet 7. It should also be noted that in this example, transparent portions 9 and 10 are not an entire portion which sandwiches the hollow reaction portion 4. Even in this case, there is no problem to check the electrode. However, if the entire portion which sandwiches the hollow reaction portion 4 is made transparent, then a sample inletting condition may be easily and visually confirmed when the sensor chip is used.

While the transparent materials may be employed so as to manufacture the base plate 1 and the cover layer 2 themselves, the entire portions of the base plate 1 and the cover layer 2 may be made transparent. In this alternative case, since the step for separately forming the transparent portions 9 and 10 is no longer required, the sensor chip may be manufactured in lower cost. As a result, this alternative case is desirable in view of an easy manufacturing point.

Precisely speaking, an intensity distribution of transmitted light is influenced by the reagent 8. As a consequence, it is preferable to employ a transparent material as the reagent 8. However, since a normally used amount of the reagent 8 is very small, if a light source having high intensity is utilized, then there is substantially no possibility that discriminations of the failure portion (pin hole etc.) of the electrodes are actually influenced. Therefore, even when the reagent 8 is opaque, there is no problem that the measurement can be carried out under normal condition.

As previously explained, Fig. 3 is a conceptional sectional view for representing one example as to a sensor chip according to a second embodiment of the present invention. In the example shown in Fig. 3, the sensor chip is manufactured by stacking a base plate, a seat layer A, another seat layer B and a cover layer in this order, while the seat layer A is overlapped with the seat layer B so as to form a spacer layer. Alternatively, each of the seat layer A and the seat layer B may be made of a plurality of seats. In this case, the spacer layer is made of a multi-layer having 3 or more layers.

Fig. 5 is a conceptional sectional view for indicating such an example that a spacer layer is made of a multi-layer having 3 or more layers. In an example as to the sensor chip of Fig. 6(a) , the seat layer A is constituted by two layers of seats A1 and A2; and the seat layer B is constituted by two layers of seats B1 and B2. As a consequence, the spacer layer is made of 4 layers of the seats A1, A2, B2 and B1. A reagent has been applied inside a groove A formed by the seats A1 and A2. In this case, a width of a groove B within the seat B2 is required to be made larger than a width of the groove A within the seat A2.

In an example as to the sensor chip of Fig. 4(b), the seat layer A is constituted by two layers of seats A1 and A2; and the seat layer B made of one layer is overlapped with the seat layer A. As a consequence, the spacer layer is made of layers of the seats A1, A2 and the seat layer B. A reagent has been applied inside a groove A formed by the seats A1 and A2. In this case, a width of a groove B within the sear layer B2 is required to be made larger than a width of the groove A within the seat A2.

## Claims

1. A sensor chip comprising:
a base plate;
a cover layer;
a hollow reaction portion provided between the base plate and the cover layer, in which a reaction is performed between a sample and a reagent applied thereinto;
a sensing member constructed of an electrode which is exposed to the hollow reaction portion; and
a sample inlet for conducting the sample to the hollow reaction portion, wherein
entire portions of the base plate and the cover layer, which are located opposite to the sensing member provided with the hollow reaction portion, are made transparent.

2. The sensor chip as claimed in claim 1, wherein
transparent portions of the base plate and the cover layer have optical transmittance identical to each other.

3. The sensor chip as claimed in claim 2, wherein
the entire portions of the base plate and the cover layer, which are located opposite to the sensing member provided in the hollow reaction portion, are formed by materials having the same thicknesses and the same qualities.

4. The sensor chip as claimed in any one of claims 1 to 3, wherein
the sample inlet and another port to be provided, if necessary, are provided in a side plane portion of the sensor chip.

5. The sensor chip as claimed in any one of claims 1 to 4, wherein
an entire portion of the cover layer, which sandwiches the hollow reaction portion, is transparent.

6. The sensor chip as claimed in claim 5, wherein
an entire portion of the base plate, which sandwiches the hollow reaction portion, is transparent; and
an opaque or semitransparent material layer is provided on the outer side of the base plate.

7. A sensor chip comprising:
a base plate;
a cover layer;
a hollow reaction portion provided between the base plate and the cover layer, in which a reaction is performed between a sample and a reagent applied thereinto;
a sensing member constructed of an electrode which is exposed to the hollow reaction portion; and
a sample inlet for conducting the sample to the hollow reaction portion, wherein
a plate A having a groove A to which a reagent has been applied and a plate B having a groove B are stacked on each other in such a manner that the groove A is coupled with the groove B, so that the hollow reaction portion is formed, and
an opening width of the groove B is larger than an opening width of the groove A at a portion of the groove B which is located opposite to a portion with the groove A, to which the reagent has been applied.

8. The sensor chip as claimed in claim 7, wherein
the plate A is a stacked layer member which is formed by the base plate and a seat layer A stacked on the base plate and having the groove A.

9. The sensor chip as claimed in claim 7 or 8, wherein
the plate B is a stacked layer member which is formed ' by the cover layer and a seat layer B formed on the cover layer and having the groove B.

10. The sensor chip as claimed in any one of claims 7 to 9, which is manufactured by adhering the plate A to the plate B after the plate A and the plate B have been formed.

11. The sensor chip as claimed in any one of claims 7 to 10, which is manufactured in such a manner that
while a single seat for forming the plate A and the plate B is provided, the single seat having the groove A and the groove B at positions which are substantially equal distances from a folding line for dividing the seat by approximately two equal parts is folded in two with setting the folding line to a center and adhering both sides of the folding line to each other.

12. The sensor chip as claimed in any one of claims 1 to 11, which is a biosensor chip.
